(19) Europäisches Patentamt / European Patent Office / Office européen des brevets

(11) **EP 4 525 535 A1**

(12) **EUROPEAN PATENT APPLICATION**
published in accordance with Art. 153(4) EPC

(43) Date of publication:
**19.03.2025 Bulletin 2025/12**

(21) Application number: **23806861.3**

(22) Date of filing: **15.05.2023**

(51) International Patent Classification (IPC):
*H04W 72/04* (2023.01)

(52) Cooperative Patent Classification (CPC):
**H04W 52/02; H04W 56/00; H04W 72/04;
H04W 72/0446; H04W 72/0453; H04W 72/23;
H04W 72/50;** Y02D 30/70

(86) International application number:
**PCT/CN2023/094117**

(87) International publication number:
**WO 2023/221909 (23.11.2023 Gazette 2023/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.05.2022 CN 202210567109**

(71) Applicant: **Vivo Mobile Communication Co., Ltd.
Dongguan, Guangdong 523863 (CN)**

(72) Inventors:
• **YING, Zuolong
Dongguan, Guangdong 523863 (CN)**
• **WANG, Lihui
Dongguan, Guangdong 523863 (CN)**
• **LI, Dongru
Dongguan, Guangdong 523863 (CN)**
• **QU, Xin
Dongguan, Guangdong 523863 (CN)**

(74) Representative: **Shieldmark
P.O. Box 90471
2509 LL The Hague (NL)**

(54) **SIGNAL PROCESSING METHOD, TERMINAL, AND NETWORK DEVICE**

(57)     This application discloses a signal processing method, a terminal, and a network-side device, pertaining to the field of communications technologies. The signal processing method of the embodiments of this application includes: a network-side device sends configuration information to a terminal, where the configuration information includes information for indicating a time-frequency resource position at which a low-power wake-up LP-WUS signal is located and information for indicating a time-frequency resource position at which a beacon signal is located, where the LP-WUS signal and the beacon signal do not overlap in a time domain resource position and/or the LP-WUS signal and the beacon signal do not overlap in a frequency domain resource position; and sends the LP-WUS signal and/or the beacon signal to the terminal. The terminal receives the configuration information, and receives the LP-WUS signal and/or the beacon signal according to the configuration information.

EP 4 525 535 A1

Receive configuration information, where the configuration information includes information for indicating a time-frequency resource position at which a low-power wake-up signal is located and information for indicating a time-frequency resource position at which a beacon signal is located, where the low-power wake-up signal and the beacon signal do not overlap in a time domain resource position and/or the low-power wake-up signal and the beacon signal do not overlap in a frequency domain resource position — 401

Receive the low-power wake-up signal and/or the beacon signal according to the configuration information — 402

FIG. 4

## Description

### CROSS-REFERENCE TO RELATED APPLICATIONS

This application claims priority to Chinese Patent Application No. 202210567109.8, filed with the Chinese Patent Office on May 20, 2022 and entitled "SIGNAL PROCESSING METHOD, TERMINAL, AND NETWORK-SIDE DEVICE", which is incorporated herein by reference in its entirety.

### TECHNICAL FIELD

This application pertains to the field of communications technologies, and in particular, relates to a signal processing method, a terminal, and a network-side device.

### BACKGROUND

With the development of communications technologies, to reduce power consumption of terminals, IEEE 802.11 ba introduces the wake-up receiver (Wake Up Receiver, WUR) mechanism, and a terminal based on this mechanism include: a main communication module and a WUR receiver. The main communication module is configured to perform transmission and reception of services and signaling data, and the WUR receiver is configured to receive low-power wake-up signals (Low Power Wake Up Signal, LP-WUS) sent by a network-side device, and then wake up the main communication module after receiving the LP-WUS signal. Before being woken up by the WUR receiver, the main communication module is in an off or sleep state, and no data is transmitted or received. The network-side device may send an LP-WUS signal periodically or according to service requirements. In addition, to keep synchronization with the terminal, the network-side device may further send a beacon (beacon) signal periodically to deliver time information.

However, due to possibility of a conflict between the two types of signals, wake-up of the main communication module of the terminal may fail and time synchronization with the network-side device may fail, which further affects communication quality of the terminal. Therefore, a signal processing method needs to be proposed to resolve the conflict between the two types of signals, so as to implement coexistence of the LP-WUS signal and the beacon signal.

### SUMMARY

Embodiments of this application provide a signal processing method, a terminal, and a network-side device, which can resolve the problem of conflict between an LP-WUS signal and a beacon signal.

According to a first aspect, a signal processing method is provided, applied to a terminal, the method includes:

receiving configuration information, where the configuration information includes information for indicating a time-frequency resource position at which a low-power wake-up LP-WUS signal is located and information for indicating a time-frequency resource position at which a beacon signal is located, where the LP-WUS signal and the beacon signal do not overlap in a time domain resource position and/or the LP-WUS signal and the beacon signal do not overlap in a frequency domain resource position; and
receiving the LP-WUS signal and/or the beacon signal according to the configuration information.

According to a second aspect, a signal processing apparatus is provided, applied to a terminal, where the apparatus includes:

a first receiving module, configured to receive configuration information, where the configuration information includes information for indicating a time-frequency resource position at which a low-power wake-up LP-WUS signal is located and information for indicating a time-frequency resource position at which a beacon signal is located, where the LP-WUS signal and the beacon signal do not overlap in a time domain resource position and/or the LP-WUS signal and the beacon signal do not overlap in a frequency domain resource position; and
a second receiving module, configured to receive the LP-WUS signal and/or the beacon signal according to the configuration information.

According to a third aspect, a signal processing method is provided, applied to a network-side device, where the method includes:

sending configuration information to a terminal, where the configuration information includes information for indicating a time-frequency resource position at which a low-power wake-up LP-WUS signal is located and information for indicating a time-frequency resource position at which a beacon signal is located, where the LP-WUS signal and the beacon signal do not overlap in a time domain resource position and/or the LP-WUS signal and the beacon signal do not overlap in a frequency domain resource position; and
sending the LP-WUS signal and/or the beacon signal to the terminal.

According to a fourth aspect, a signal processing apparatus is provided, applied to a network-side device, where the apparatus includes:

a first sending module, configured to send configuration information to a terminal, where the configuration information includes information for indicating a time-frequency resource position at which a low-power wake-up LP-WUS signal is located and information for indicating a time-frequency resource position at which a beacon signal is located, where the LP-WUS signal and the beacon signal do not overlap in a time domain resource position and/or the LP-WUS signal and the beacon signal do not overlap in a frequency domain resource position; and

a second sending module, configured to send the LP-WUS signal and/or the beacon signal to the terminal.

According to a fifth aspect, a terminal is provided, where the terminal includes a processor and a memory, and a program or instructions capable of running on the processor are stored in the memory. When the program or instructions are executed by the processor, the steps of the method according to the first aspect are implemented.

According to a sixth aspect, a network-side device is provided, where the network-side device includes a processor and a memory, and a program or instructions capable of running on the processor are stored in the memory. When the program or instructions are executed by the processor, the steps of the method according to the third aspect are implemented.

According to a seventh aspect, a signal processing system is provided, including: a network-side device and a terminal, where the terminal may be configured to perform the steps of the signal processing method according to the first aspect, and the network-side device may be configured to perform the steps of the signal processing method according to the third aspect.

According to an eighth aspect, a readable storage medium is provided, where a program or instructions are stored in the readable storage medium, and when the program or instructions are executed by a processor, the steps of the method according to the first aspect are implemented, or the steps of the method according to the third aspect are implemented.

According to a ninth aspect, a chip is provided, where the chip includes a processor and a communication interface, the communication interface is coupled to the processor, and the processor is configured to run a program or instructions to implement the method according to the first aspect or implement the method according to the third aspect.

According to a tenth aspect, a computer program/program product is provided, where the computer program/program product is stored in a non-transitory storage medium, and the computer program/program product is executed by at least one processor to implement the steps of the method according to the first aspect.

In the embodiments of this application, the network-side device first sends configuration information to the terminal, where the configuration information includes information for indicating a time-frequency resource position at which a low-power wake-up LP-WUS signal is located and information for indicating a time-frequency resource position at which a beacon signal is located, where the LP-WUS signal and the beacon signal do not overlap in a time domain resource position and/or the LP-WUS signal and the beacon signal do not overlap in a frequency domain resource position; and then sends the LP-WUS signal and/or the beacon signal to the terminal. The terminal first receives the configuration information sent by the network-side device, and then receives the LP-WUS signal and/or the beacon signal according to the configuration information.

It can be learned that in the embodiments of this application, when configuring the time-frequency resource of the LP-WUS signal and the time-frequency resource of the beacon signal, the network-side device can separate the two signals based on a time-domain resource and/or a frequency-domain resource, and the terminal chooses to receive which signal, so as to solve the conflict between the two signals, avoid the problems that a main communication module of the terminal fails to wake up and time synchronization with the network-side device fails, thereby implementing coexistence of the two signals and ensuring communication quality of the terminal.

**BRIEF DESCRIPTION OF DRAWINGS**

FIG. 1 is a block diagram of a wireless communications system to which the embodiments of this application are applicable;
FIG. 2 is a schematic structural diagram of a terminal according to an embodiment of this application;
FIG. 3 is a schematic diagram of an application scenario according to an embodiment of this application;
FIG. 4 is a flowchart of a signal processing method according to an embodiment of this application;
FIG. 5 is a first schematic diagram of configuring a time-frequency resource by a network-side device according to an embodiment of this application;
FIG. 6 is a second schematic diagram of configuring a time-frequency resource by a network-side device according to an embodiment of this application;
FIG. 7 is a third schematic diagram of configuring a time-frequency resource by a network-side device according to an embodiment of this application;
FIG. 8 is a flowchart of another signal processing method according to an embodiment of this application;
FIG. 9 is a structural block diagram of a signal processing apparatus according to an embodiment of this application;
FIG. 10 is a structural block diagram of another signal processing apparatus according to an embodiment of this application;

FIG. 11 is a structural block diagram of a communication device according to an embodiment of this application;

FIG. 12 is a schematic diagram of a hardware structure of a terminal for implementing the embodiments of this application; and

FIG. 13 is a schematic diagram of a hardware structure of a network-side device for implementing the embodiments of this application.

## DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

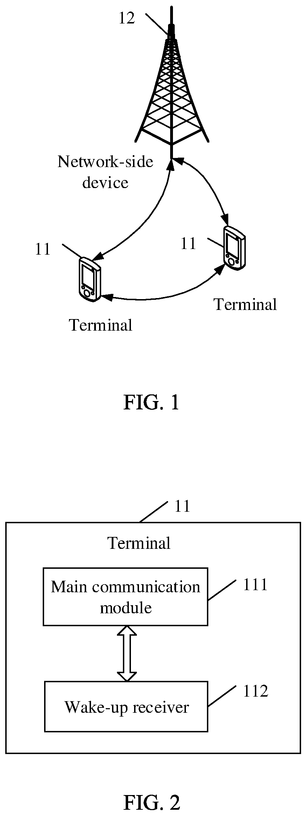

FIG. 1 is a block diagram of a wireless communication system to which the embodiments of this application are applicable. The wireless communication system includes a terminal 11 and a network-side device 12. The terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (Ultra-Mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), vehicle user equipment (VUE), pedestrian user equipment (PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. It should be noted that a specific type of the terminal 11 is not limited in the embodiments of this application. The network-side device 12 may include an access network device or a core network device, where the access network device may also be referred to as a radio access network device, a radio access network (Radio Access Network, RAN), a radio access network function, or a radio access network unit. The access network device may include a base station, a WLAN access point or a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

To facilitate understanding, application scenarios and concepts involved in the embodiments of this application are explained.

Application scenario: As shown in FIG. 2, a terminal 11 includes a main communication module 111 and a wake-up receiver (Wake Up Receiver, WUR) 112. The main communication module 111 is configured to perform transmission and reception of services and signaling data.

The WUR receiver 112 (also referred to as low-power wake-up receiver) is configured to receive low-power wake-up signals (Low Power Wake Up Signal, LP-WUS) sent by a network-side device, and then wake up the main communication module 111 after receiving the LP-WUS signal.

Before being woken up by the WUR receiver 112, the main communication module 111 is in an off or sleep state, and no data is sent or received, thereby effectively reducing power consumption of the terminal.

The LP-WUS signal can be applied to a terminal in a radio resource control idle/inactive (Radio Resource Control_idle/inactive, RRC_idle/inactive) state, or can be applied to a terminal in a radio resource control connection RRC_connected state. When the terminal is in an RRC_idle/inactive state, to keep synchronization between the network-side device and the terminal, the network-side device may also send a beacon (beacon) signal periodically to deliver time information.

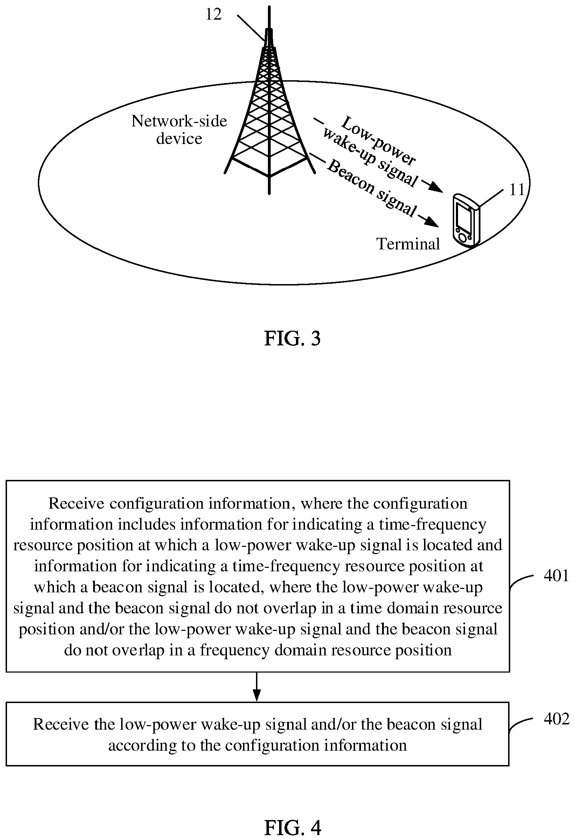

As shown in FIG. 3, the network-side device 12 may send a low-power wake-up signal and a beacon signal to the terminal 11, where the network-side device 12 sends a low-power wake-up signal to the terminal 11 periodically or according to service requirements, and the network-side device 12 sends a beacon signal to the terminal 11 periodically to deliver time information.

Low-power wake-up signals, namely LP-WUS signals, sometimes referred to as a WUS signals, are usually some relatively simple wake-up signals, such as on-off keying (On-Off Keying, OOK) signal. If it is an OOK signal, the WUR receiver may detect an LP-WUS signal in a manner of envelope detection, which can reduce power consumption to several hundred microwatts.

Beacon signal, namely beacon signal: Broadly speaking, in the process of detecting low-power wake-up signal, the terminal may move or move out of coverage of a low-power wake-up signal due to environmental change, leading to a failure in receiving a wake-up signal sent by the network. Therefore, one of functions of the beacon signal is measurement to implement tracking of network signal quality by the terminal, and avoid the problem of service loss caused by the terminal moving out of the coverage of the wake-up signal.

From the point of view of the IEEE 802.11 ba communication protocol, the beacon signal is also referred to as a WUR beacon signal. To keep synchronization between the WUR receiver and the network-side device, the network-side device transmits a beacon signal periodically to deliver time information. Specifically, some fields in a beacon signal frame carry a TSF timer (timer) of the network-side device. After receiving the beacon signal frame, the terminal updates a local TSF timer according to a time update criterion defined by IEEE 802.11 ba, so as to implement the purpose of synchronization with the network-side device. A transmission period of the beacon signal and an offset of a transmission starting position are indicated by an operation element sent by the network-side device, with the period being the least number of TSF time units between two beacon signal transmissions and the starting position being the number of TSF time units deviated from TSF0. When carrier sense multiple access (Carrier Sense Multiple Access, CSMA) deferrals (deferrals) occur, transmission of the beacon signal may be delayed in a current period; however, in subsequent periods, transmission is still performed at a position determined based on the transmission period and transmission starting position of the beacon signal.

In addition, the beacon signal may alternatively be used as a link-hold signal. When a beacon signal is not received for a period of time, the terminal needs to perform WUR searching to search for a signal, or switches to a wake-up mode of the main communication module. When a discontinuous reception (Discontinuous Reception, DRX) cycle is configured for the LP-WUS signal, that is, when the network-side device wakes up to monitor to the LP-WUS signal based on the DRX cycle, the LP-WUS may also be used as a link-hold signal. When the DRX cycle is off, no LP-WUS signal is sent, and the network-side device may send a beacon signal as a link-hold signal.

The following describes in detail a signal processing method provided in the embodiments of this application by using some embodiments and application scenarios thereof.

FIG. 4 is a flowchart of a signal processing method according to an embodiment of this application, which is applied to a terminal. As shown in FIG. 4, the method may include the following steps: step 401 and step 402.

Step 401: Receive configuration information, where the configuration information includes information for indicating a time-frequency resource position at which a low-power wake-up signal is located and information for indicating a time-frequency resource position at which a beacon signal is located, where the low-power wake-up signal and the beacon signal do not overlap in a time domain resource position and/or the low-power wake-up signal and the beacon signal do not overlap in a frequency domain resource position.

In this embodiment of this application, the configuration information is generated by the network-side device and sent to the terminal. The network-side device configures a time-frequency resource for transmission of the LP-WUS signal and a time-frequency resource for transmission of the beacon signal, generates the configuration information based on the time-frequency resource for transmission of the LP-WUS signal and the time-frequency resource for transmission of the beacon signal, and then sends the configuration information to the terminal.

The information for indicating the time-frequency resource position at which the LP-WUS signal is located in the configuration information may include: time domain, frequency domain, and code domain information for transmission of the LP-WUS signal; where the information for indicating the time-frequency resource position at which the beacon signal is located in the configuration information may include: time domain, frequency domain, and code domain information for transmission of the beacon signal. The code domain information is used for participating in signal decoding.

From the perspective of the network-side device, to avoid the conflict between the LP-WUS signal and the beacon signal, the network-side device may configure the LP-WUS signal and the beacon signal not to overlap in the time domain resource position; or the network-side device may configure the LP-WUS signal and the beacon signal not to overlap in the frequency domain resource position; or the network-side device may configure the LP-WUS signal and the beacon signal not to overlap in the frequency domain resource position, and the LP-WUS signal and the beacon signal neither to overlap in the time domain resource position. That is, the two signals are separated in time domain and/or frequency domain resources.

In some embodiments, the network-side device may configure the LP-WUS signal and the beacon signal in the time domain resource as follows, so as to implement that the LP-WUS signal and the beacon signal do not overlap in the time domain resource position: the sending time of the LP-WUS signal is different from the sending time of the beacon signal.

For example, the sending time of the beacon signal is T1, the sending time of the LP-WUS signal is T2, and the network-side device configures T2%T1!=0, so as to implement that the sending time of the LP-WUS signal does not overlap with the sending time of the beacon signal, where "%" stands for a remainder operation, "!=0" means that the operation result is not 0, and T2%T1!=0 means that a remainder result of T2 with respect to T1 is not 0, which means that the sending times of the two signals do not overlap.

Preferably, to reserve a time for radio frequency conversion of the terminal, the network-side device may configure the LP-WUS signal and the beacon signal in time domain resources as follows: a time interval between the sending time of the LP-WUS signal and the sending time of the beacon signal is greater than a time-frequency conversion time of the terminal.

In addition, considering that the beacon signal is a signal sent periodically by the network-side device and the LP-WUS signal is a signal sent periodically or on demand by the network-side device, in some embodiments, when the LP-WUS signal is a signal sent on demand, if a time of sending the LP-WUS signal on demand happens to be a time of sending the beacon signal periodically, to avoid a conflict, the network-side device can postpone transmission of one of the signals in a current transmission period, for example, postpone transmission of the beacon signal in the current period, and still send the beacon signal based on the transmission period and transmission starting position of the beacon signal in the subsequent periods.

In some embodiments, the network-side device may configure the LP-WUS signal and the beacon signal in the frequency domain resource as follows, so as to implement that the LP-WUS signal and the beacon signal do not overlap in the frequency domain resource position: the frequency domain occupied by the LP-WUS signal does not overlap with the frequency domain occupied by the beacon signal.

For example, a frequency bandwidth occupied by the beacon signal is $B_1$, a carrier frequency $f_1$, a frequency bandwidth occupied by the LP-WUS signal is $B_2$, and a carrier frequency $f_2$, and network-side device configures

$$f_1 - \frac{B_1}{2} > f_2 + \frac{B_2}{2}$$

or

$$f_2 - \frac{B_2}{2} > f_1 + \frac{B_1}{2}$$

, to implement that frequency domains occupied by the LP-WUS signal and the beacon signal do not overlap. $f_1 - \frac{B_1}{2}$ represents a lower boundary of the frequency domain occupied by the beacon signal, $f_1 + \frac{B_1}{2}$ represents an upper boundary of the frequency domain occupied by the beacon signal, $f_2 - \frac{B_2}{2}$ represents a lower boundary of the frequency domain occupied by the LP-WUS signal, and $f_2 + \frac{B_2}{2}$ represents an upper boundary of the frequency domain occupied by the LP-WUS signal. When $f_1 > f_2$, $f_1 - \frac{B_1}{2} > f_2 + \frac{B_2}{2}$ indicates that the lower boundary of the frequency domain occupied by the beacon signal is higher than the upper boundary of the frequency domain occupied by the LP-WUS signal, that is, adjacent boundaries of the frequency domains of the two signals do not overlap.

When $f_2 > f_1$, $f_2 - \frac{B_2}{2} > f_1 + \frac{B_1}{2}$ indicates that the lower boundary of the frequency domain occupied by the LP-WUS signal is higher than the upper boundary of the frequency domain occupied by the beacon signal, that is, the adjacent boundaries of the frequency domains of the two signals do not overlap. The adjacent boundaries of the frequency domains of the two signals do not overlap, so that the frequency domains occupied by the two signals does not overlap.

Preferably, considering that when a frequency domain gap between the LP-WUS signal and the beacon signal is larger than the filter bandwidth of the terminal, any one signal selected by the terminal may not be interfered with by another signal, the network-side device may configure frequency domain resources for the LP-WUS signal and the beacon signal as follows: a frequency gap between the frequency domain occupied by the LP-WUS signal and the frequency domain occupied by the beacon signal is larger than the filter bandwidth of the terminal.

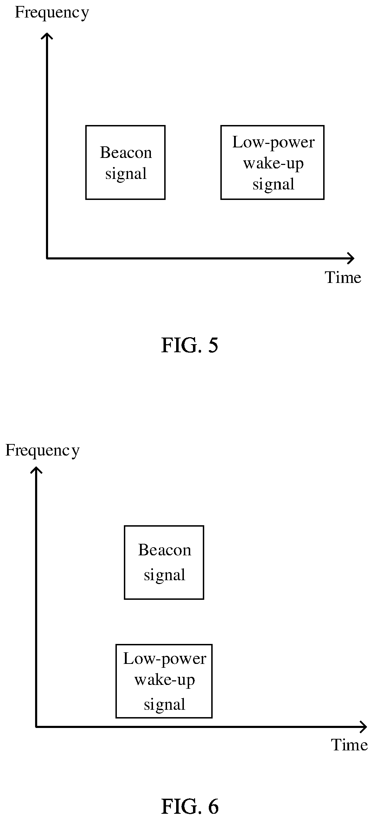

In some embodiments, the network-side device may alternatively perform configuration in a manner shown in FIG. 5: the sending time of the low-power wake-up signal is different from the sending time of the beacon signal, and the frequency domain occupied by the low-power wake-up signal is the same as the frequency domain occupied by the beacon signal. It can be understood that a transmission mode of the two signals is time-division multiplexing (Time-Division Multiplexing, TDM).

In some embodiments, the network-side device may alternatively perform configuration in a manner shown in FIG. 6: the frequency domain occupied by the low-power wake-up signal does not overlap with the frequency domain occupied by the beacon signal, and the sending time of the low-power wake-up signal is the same as the sending time of the beacon signal. It can be understood that a transmission mode of the two signals is frequency-division multiplexing (Frequency-Division Multiplexing, FDM).

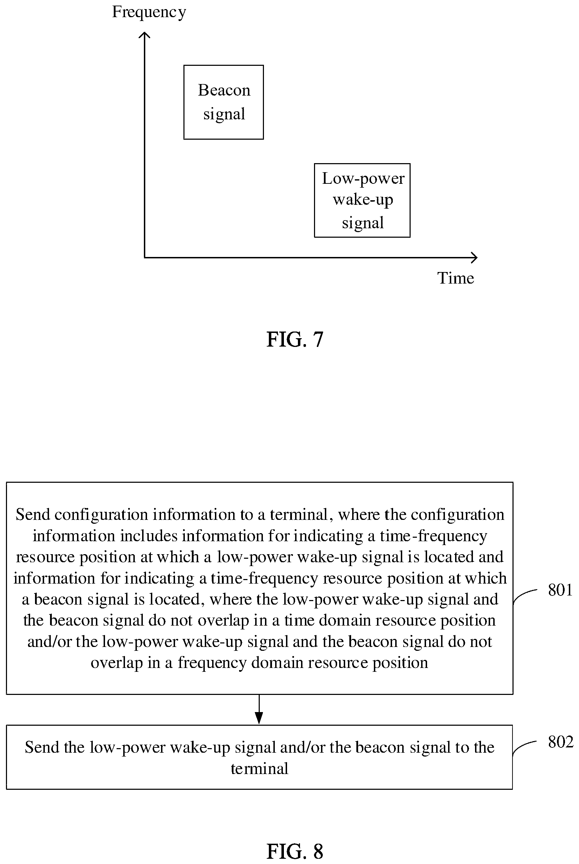

In some embodiments, the network-side device may alternatively perform configuration in a manner shown in FIG. 7: the sending time of the low-power wake-up signal is different from the sending time of the beacon signal, and the frequency domain occupied by the low-power wake-up signal does not overlap with the frequency domain occupied by the beacon signal. It can be understood that the transmission mode of the two signals is TDM and FDM modes.

Step 402: Receive the low-power wake-up signal and/or the beacon signal according to the configuration information.

In this embodiment of this application, a sending time, frequency domain occupied during transmission, and code domain information of the LP-WUS signal, and a sending time, frequency domain occupied during transmission, and code domain information of the beacon signal can be first obtained by parsing the configuration information.

Then, based on the sending time, frequency domain, and code domain information that are obtained through parsing, it is determined whether there is a conflict between the LP-WUS signal and the beacon signal. If there is no conflict, the terminal receives the two signals; or if there is a conflict, the terminal chooses to receive one of the signals.

In some embodiments, the foregoing step 402 may include the following steps:

receiving, by the terminal, the LP-WUS signal and the beacon signal in a case that it is determined, according to the configuration information, that a sending time of the LP-WUS signal is different from a sending time of the beacon signal; or
receiving, by the terminal, one of the LP-WUS signal and the beacon signal in a case that it is determined, according to the configuration information, that the sending time of the LP-WUS signal is the same as the sending time of the beacon signal.

The sending time of the LP-WUS signal is different from the sending time of the beacon signal, indicating that there is no conflict between the two signals. In this case, the terminal receives the two signals. The sending time of the LP-WUS signal is the same as the sending time of the beacon signal, indicating that there is a conflict between the two signals. In this case, the terminal chooses to receive one of the two signals.

In this embodiment of this application, a reception priority of the LP-WUS signal and the beacon signal may be defined in advance, and in a case of a conflict between the LP-WUS signal and the beacon signal, the terminal may choose based on the pre-configured priority information to receive one of the LP-WUS signal and the beacon signal, where the priority information may be configured by the terminal or be configured by the network-side device.

In this embodiment of this application, in a case of a conflict between the LP-WUS signal and the beacon signal, the terminal may receive the beacon signal but not the LP-WUS signal; or the terminal may receive the beacon signal, and does not participate in decoding after receiving the LP-WUS signal; or the terminal may receive the LP-WUS signal but not the beacon signal; or the terminal may receive the LP-WUS signal, and does not participate in decoding after receiving the beacon signal.

To implement the above cases, the terminal may use the following manners:

monitoring, by the terminal, a signal at the time-frequency resource position at which the beacon signal is located or at the time-frequency resource position at which the LP-WUS signal is located;
in a case that a beacon signal is monitored at the time-frequency resource position at which the beacon signal is located, if the terminal detects the beacon signal and the LP-WUS signal, decoding the beacon signal and skipping decoding the LP-WUS signal; and
in a case that a LP-WUS signal is monitored at the time-frequency resource position at which the LP-WUS signal is located, if the terminal detects the LP-WUS signal and the beacon signal, decoding the LP-WUS signal and skipping decoding the beacon signal.

Using reception of the beacon signal being chosen as an example, the beacon signal is monitored at the time-frequency resource position for transmission of the beacon signal. If the beacon signal and the LP-WUS signal have a same sending time but different frequency domains, only the beacon signal can be detected, but the LP-WUS signal cannot be detected, so as to implement that the beacon signal is received and the LP-WUS signal is not received. If the beacon signal and the LP-WUS signal have a same sending time and have interference in the frequency domain, the beacon signal and the LP-WUS signal may be both detected. Because the terminal may obtain a modulation mode and corresponding decoding mode of the two signals from the code domain information obtained through parsing, the corresponding decoding manner may be used to decode only the beacon signal of the two detected signals, but not decoding the LP-WUS signal, so as to implement that the terminal receives the beacon signal, and does not participate in decoding after receiving the LP-WUS signal. This holds true for the terminal choosing to receive the LP-WUS signal, which will not be described here.

It can be learned from the foregoing embodiment that in this embodiment of this application, when configuring the time-frequency resource of the LP-WUS signal and the time-frequency resource of the beacon signal, the network-side device can separate the two signals based on a time-domain resource and/or a frequency-domain resource, and the terminal chooses to receive which signal, so as to solve the conflict between the two signals, avoid the problems that a main communication module of the terminal fails to wake up and time synchronization with the network-side device fails, thereby implementing coexistence of the two signals and ensuring communication quality of the terminal.

In another embodiment provided in this application, the quality of the communication link between the terminal and the network-side device may also be monitored based on the beacon signal, and a behavior of the terminal may be adjusted based on the quality of the communication link to avoid an abnormal operation of the terminal due to poor quality of the communication link. In this case, on the basis of the embodiment shown in FIG. 1, the following steps (not shown in the figure) may be added: step 403 and step 404.

Step 403: The terminal determines, based on a beacon signal detected at the time-frequency resource position at which the beacon signal is located, whether quality of a communication link between the terminal and the network-side device meets a preset quality requirement.

In some embodiments, the foregoing step 403 may include the following steps:

starting a first timer when a beacon signal is detected, and if a next beacon signal is not detected when the first timer expires, determining that the quality of the communication link between the terminal and the network-side device does not meet the preset quality requirements.

In some embodiments, the foregoing step 403 may include the following steps:

starting a second timer when continuous N beacon signals are detected and quality of each of the N beacon signals is not higher than a preset first quality value, and if continuous M beacon signals are not detected when the second timer expires, determining that the quality of the communication link between the terminal and the network-side device does not meet the preset quality requirement; where N is an integer greater than 1.

In this embodiment of this application, a parameter used for indicating the signal quality may include any one of the following: received signal strength indicator (Received Signal Strength Indicator, RSSI), reference signal received power (Reference Signal Receiving Power, RSRP), and signal to interference plus noise ratio (Signal to Interference plus Noise Ratio, SINR).

In some embodiments, the foregoing step 403 may include the following steps:

starting a second timer when continuous N beacon signals are detected and quality of each of the N beacon signals is not higher than a preset first quality value, and if continuous M beacon signals are not detected when the second timer expires, and a signal with quality not higher than the preset second quality value is present in the M beacon signals, determining that the quality of the communication link between the terminal and the network-side device does not meet the preset quality requirement; where M is an integer greater than 1.

Expiration durations of the first timer and the second timer may be set by the user based on actual statues.

Step 404: If the preset quality requirement is not met, the terminal performs one of the following operations: exiting an LP-WUS signal monitoring state and entering an RRC_idle/inactive state;

performing measurement on a synchronization signal block (Synchronization Signal Block, SSB) and monitoring a paging (paging) signal;
triggering a random access procedure; and
exiting a beacon signal monitoring state and entering an LP-WUS signal monitoring state.

It may be seen that in this embodiment of this application, the quality of the communication link between the terminal and the network-side device may be monitored based on the beacon signal, and a behavior of the terminal may be adjusted based on the quality of the communication link, so as to avoid an abnormal operation of the terminal caused by the poor quality of the communication link.

In a case that the LP-WUS signal is a periodic signal, in another embodiment provided in this application, the monitoring state of the terminal can be adjusted based on the LP-WUS signal, so as to avoid an abnormal operation of the terminal caused by an abnormal LP-WUS signal. In this case, the following step may be added on the basis of the embodiment shown in FIG. 4:

monitoring, by the terminal, an LP-WUS signal at the time-frequency resource position at which the LP-WUS signal is located, and starting a third timer; and if an LP-WUS signal is not detected when the third timer expires, exiting, by the terminal, an LP-WUS signal monitoring state and/or entering a beacon signal monitoring state. Expiration duration of the third timer may be set by the user based on actual statues.

FIG. 8 is a flowchart of another signal processing method according to an embodiment of this application, which is applied to a network-side device. As shown in FIG. 8, the method may include the following steps: step 801 and step 802.

Step 801: Send configuration information to a terminal, where the configuration information includes information for indicating a time-frequency resource position at which a low-power wake-up signal is located and information for indicating a time-frequency resource position at which a beacon signal is located, where the low-power wake-up signal and the beacon signal do not overlap in a time domain resource position and/or the low-power wake-up signal and the beacon signal do not overlap in a frequency domain resource position.

In this embodiment of this application, the network-side device may configure the LP-WUS signal and the beacon signal not to overlap in the time domain resource position; or the network-side device may configure the LP-WUS signal and the beacon signal not to overlap in the frequency domain resource position; or the network-side device may configure the LP-WUS signal and the beacon signal not to overlap in the frequency domain resource position, and the LP-WUS signal and the beacon signal neither to overlap in the time domain resource position, so as to avoid the conflict between the LP-WUS signal and the beacon signal.

In some embodiments, that the LP-WUS signal and the beacon signal do not overlap in the time domain resource position may include that the sending time of the LP-WUS signal is different from that of the beacon signal.

Preferably, that the sending time of the LP-WUS signal is different from the sending time of the beacon signal to reserve a time for radio frequency conversion of the terminal may include that a time interval between the sending time of the LP-WUS signal and the sending time of the beacon signal is greater than a radio frequency conversion time of the terminal.

In addition, considering that the beacon signal is a signal sent periodically by the network-side device and the LP-WUS signal is a signal sent periodically or on demand by the network-side device, in some embodiments, when the LP-WUS signal is a signal sent on demand, if a time of sending the LP-WUS signal on demand happens to be a time of sending the beacon signal periodically, to avoid a conflict, the network-side device can postpone transmission of one of the signals in a current transmission period, for example, postpone transmission of the beacon signal in the current period, and still send the beacon signal based on the transmission period and transmission starting position of the beacon signal in the subsequent periods.

In some embodiments, that the LP-WUS signal and the beacon signal do not overlap in the frequency domain resource position may include that the frequency domain occupied by the LP-WUS signal does not overlap with the frequency domain occupied by the beacon signal.

Preferably, considering that when a frequency domain gap between the LP-WUS signal and the beacon signal is larger than a filter bandwidth of the terminal, any one signal selected by the terminal may not be interfered with by another signal, that the frequency domain occupied by the LP-WUS signal does not overlap with the frequency domain occupied by the beacon signal includes: a frequency gap between the frequency domain occupied by the LP-WUS signal and the frequency domain occupied by the beacon signal is larger than the filter bandwidth of the terminal.

Step 802: Send the low-power wake-up signal and/or the beacon signal to the terminal.

In this embodiment of this application, the network-side device sends the LP-WUS signal and/or the beacon signal to the terminal according to the configuration information.

It can be learned from the foregoing embodiment that in this embodiment of this application, when configuring the time-frequency resource of the LP-WUS signal and the time-frequency resource of the beacon signal, the network-side device can separate the two signals based on a time-domain resource and/or a frequency-domain resource, and the terminal chooses to receive which signal, so as to solve the conflict between the two signals, avoid the problems that a main communication module of the terminal fails to wake up and time synchronization with the network-side device fails, thereby implementing coexistence of the two signals and ensuring communication quality of the terminal.

For the signal processing method provided in the embodiments of this application, the execution subject may be a signal processing apparatus. In the embodiments of this application, the signal processing method being performed by the signal processing apparatus is used as an example to describe the signal processing apparatus provided in the embodiments of this application.

The following describes the signal processing apparatus provided in the embodiments of this application.

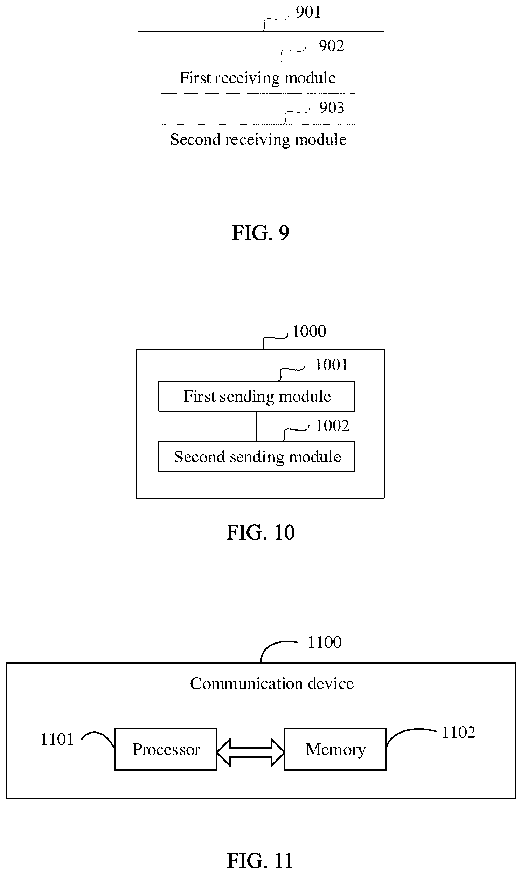

FIG. 9 is a structural block diagram of a signal processing apparatus according to an embodiment of this application, and the apparatus is applied to a terminal. As shown in FIG. 9, the signal processing apparatus 900 may include a first receiving module 901 and a second receiving module 902.

The first receiving module 901 is configured to receive configuration information, where the configuration information includes information for indicating a time-frequency resource position at which a low-power wake-up LP-WUS signal is located and information for indicating a time-frequency resource position at which a beacon signal is located, where the LP-WUS signal and the beacon signal do not overlap in a time domain resource position and/or the LP-WUS signal and the beacon signal do not overlap in a frequency domain resource position; and

the second receiving module 902 is configured to receive the LP-WUS signal and/or the beacon signal according to the configuration information.

It can be learned from the foregoing embodiment that in this embodiment of this application, when configuring the time-frequency resource of the LP-WUS signal and the time-frequency resource of the beacon signal, the network-side device can separate the two signals based on a time-domain resource and/or a frequency-domain resource, and the terminal chooses to receive which signal, so as to solve the conflict between the two signals, avoid the problems that a main communication module of the terminal fails to wake up and time synchronization with the network-side device fails, thereby implementing coexistence of the two signals and ensuring communication quality of the terminal.

Optionally, in an optional embodiment, the second receiving module 902 may include:

a first receiving submodule, configured to receive the LP-WUS signal and the beacon signal in a case that it is determined, according to the configuration information, that a sending time of the LP-WUS signal is different from a sending time of the beacon signal; or

a second receiving submodule, configured to receive one of the LP-WUS signal and the beacon signal in a case that it is determined, according to the configuration information, that the sending time of the LP-WUS signal is the same as the sending time of the beacon signal.

Optionally, in an optional embodiment, the second receiving submodule may include:

a monitoring unit, configured to monitor a signal at the time-frequency resource position at which the beacon signal is located or at the time-frequency resource position at which the LP-WUS signal is located;

a first processing unit, configured to: in a case that a beacon signal is monitored at the time-frequency resource position at which the beacon signal is located, if the beacon signal and the LP-WUS signal are detected, decode the beacon signal and skip decoding the LP-WUS signal; and

a second processing unit, configured to: in a case that an LP-WUS signal is monitored at the time-frequency resource position at which the LP-WUS signal is located, if the beacon signal and the LP-WUS signal are detected, decode the LP-WUS signal and skip decoding the beacon signal.

Optionally, in an optional embodiment, the second receiving submodule may include:

a receiving unit, configured to: based on pre-configured priority information, choose to receive one of the LP-WUS signal and the beacon signal.

Optionally, as an embodiment, the signal processing apparatus 900 may further include:

a determining module, configured to: based on a beacon signal detected at the time-frequency resource position at which the beacon signal is located, determine whether quality of a communication link between the terminal and the network-side device meets a preset quality requirement; and

a first processing module, configured to perform one of the following operations in a case that the preset quality requirement is not met:

exiting an LP-WUS signal monitoring state and entering a radio resource control idle or inactive state;

performing measurement on a synchronization signal block SSB and monitoring a paging (paging) signal;

triggering a random access procedure; and

exiting a beacon signal monitoring state and entering an LP-WUS signal monitoring state.

Optionally, in an optional embodiment, the determining module may include:

a first determining submodule, configured to start a first timer when a beacon signal is detected, and if a next beacon signal is not detected when the first timer expires, determine that the quality of the communication link between the terminal and the network-side device does not meet the preset quality requirements; or

a second determining submodule, configured to start a second timer when continuous N beacon signals are detected and quality of each of the N beacon signals is not higher than a preset first quality value, and if continuous M beacon signals are not detected when the second timer expires, determine that the quality of the communication link between the terminal and the network-side device does not meet the preset quality requirement; or

a third determining submodule, configured to: if continuous M beacon signals are detected when the second timer expires, and quality of a signal of the M beacon signals is not higher than a preset second quality value, determine that the quality of the communication link between the terminal and the network-side device does not meet the preset quality requirement; where N and M are integers greater than 1.

Optionally, in an optional embodiment, the LP-WUS signal is a periodic signal, and the signal processing apparatus 900 may further include:

a second processing module, configured to monitor an LP-WUS signal at the time-frequency resource position at which the LP-WUS signal is located, and start a third timer; and if an LP-WUS signal is not detected when the third timer expires, exit an LP-WUS signal monitoring state and/or enter a beacon signal monitoring state.

FIG. 10 is a structural block diagram of another signal processing apparatus according to an embodiment of this application. As shown in FIG. 10, the signal processing apparatus 1000 may include a first sending module 1001 and a second sending module 1002.

The first sending module 1001 is configured to send configuration information to a terminal, where the configuration information includes information for indicating a time-frequency resource position at which a low-power wake-up LP-WUS signal is located and information for indicating a time-frequency resource position at which a beacon signal is located, where the LP-WUS signal and the beacon signal do not overlap in a time domain resource position and/or the LP-WUS signal and the beacon signal do not overlap in a frequency domain resource position; and

the second sending module 1002 is configured to send the LP-WUS signal and/or the beacon signal to the terminal.

It can be learned from the foregoing embodiment that in this embodiment of this application, when configuring the time-frequency resource of the LP-WUS signal and the time-frequency resource of the beacon signal, the network-side device can separate the two signals based on a time-domain resource and/or a frequency-domain resource, and the terminal chooses to receive which signal, so as to solve the conflict between the two signals, avoid the problems that a main communication module of the terminal fails to wake up and time synchronization with the network-side device fails, thereby implementing coexistence of the two signals and ensuring communication quality of the terminal.

Optionally, as an embodiment, that the LP-WUS signal and the beacon signal do not overlap in the time domain resource position includes:

a sending time of the LP-WUS signal is different from a sending time of the beacon signal.

Optionally, as an embodiment, that the sending time of the LP-WUS signal is different from the sending time of the beacon signal includes:

a time interval between the sending time of the LP-WUS signal and the sending time of the beacon signal is greater than a radio frequency conversion time of the terminal.

Optionally, as an embodiment, that the LP-WUS signal and the beacon signal do not overlap in the frequency domain resource position includes:

a frequency domain occupied by the LP-WUS signal does not overlap with a frequency domain occupied by the beacon signal.

Optionally, as an embodiment, that the frequency domain occupied by the LP-WUS signal does not overlap with the frequency domain occupied by the beacon signal includes:

a frequency gap between the frequency domain occupied by the LP-WUS signal and the frequency domain occupied by the beacon signal is larger than a filter bandwidth of the terminal.

The signal processing apparatus in this embodiment of this application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal listed above, and other devices may be a server, a network attached storage (Network Attached Storage, NAS), and the like. This is not limited in the embodiments of this application.

The signal processing apparatus provided in this embodiment of this application is capable of implementing the processes implemented in the method embodiments in FIG. 4 or FIG. 8, with the same technical effects achieved. To avoid repetition, details are not described herein again.

Optionally, as shown in FIG. 11, an embodiment of this application further provides a communication device 1100, including a processor 1101 and a memory 1102, where a program or instructions capable of running on the processor 1101 are stored in the memory 1102. For example, when the communication device 1100 is a terminal and when the program or instructions are executed by the processor 1101, the steps of the foregoing embodiments of the signal processing method are implemented, with the same technical effects achieved. When the communication device 1100 is a network-side device and when the program or instructions are executed by the processor 1101, the steps of the foregoing embodiments of the signal processing method are implemented, with the same technical effects achieved. To avoid repetition, details are not described herein again.

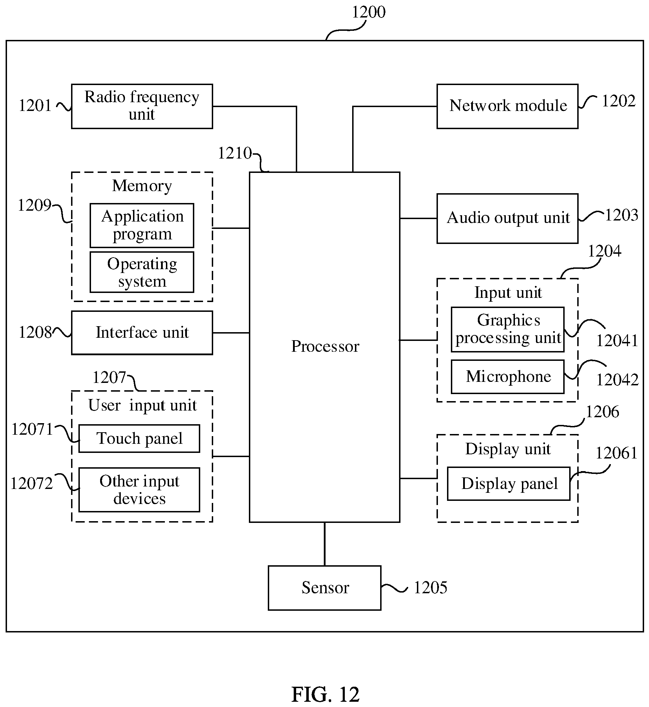

FIG. 12 is a schematic diagram of a hardware structure of a terminal for implementing the embodiments of this application.

As shown in FIG. 12, the terminal 1200 includes but is not limited to components such as a radio frequency unit 1201, a network module 1202, an audio output unit 1203, an input unit 1204, a sensor 1205, a display unit 1206, a user input unit 1207, an interface unit 1208, a memory 1209, and a processor 1210.

Persons skilled in the art can understand that the terminal 1200 may further include a power supply (for example, a battery) supplying power to the components, and the power supply may be logically connected to the processor 1210 through a power management system. In this way, functions such as charge management, discharge management, and power consumption management are implemented by using the power management system. The structure of the terminal shown in FIG. 12 does not constitute any limitation on the terminal. The terminal may include more or fewer components than shown in the figure, or a combination of some components, or the components disposed differently. Details are not described herein again.

It can be understood that in this embodiment of this application, the input unit 1204 may include a graphics processing unit (Graphics Processing Unit, GPU) 12041 and a microphone 12042. The graphics processing unit 12041 processes image data of a still picture or video obtained by an image capture apparatus (such as a camera) in a video capture mode or an image capture mode. The display unit 1206 may include a display panel 12061, and the display panel 12061 may be configured in a form of a liquid crystal display, an organic light-emitting diode, and the like. The user input unit 1207 may include at least one of a touch panel 12071 and other input devices 12072. The touch panel 12071 is also referred to as a touchscreen. The touch panel 12071 may include two parts: a touch detection apparatus and a touch controller. The other input devices 12072 may include but are not limited to a physical keyboard, a function key (such as a volume control key or a power on/off key), a trackball, a mouse, a joystick, and the like. Details are not described herein.

In this embodiment of this application, the radio frequency unit 1201 receives downlink data from a network-side device, and then sends the downlink data to the processor 1210 for processing. In addition, the radio frequency unit 1201 may send uplink data to the network-side device. Generally, the radio frequency unit 1201 includes but is not limited to an antenna, an amplifier, a transceiver, a coupler, a low noise amplifier, a duplexer, and the like.

The memory 1209 may be configured to store software programs or instructions and various data. The memory 1209 may include a first storage area for storing a program or instructions and a second storage area for storing data. The first storage area may store an operating system, an application program or instruction required by at least one function (for example, a sound playback function or an image playback function), and the like. In addition, the memory 1209 may include a volatile memory or a non-volatile memory, or the memory 1209 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory can be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DRRAM). The memory 1209 in the embodiments of this application includes but is not limited to these and any other suitable types of memories.

The processor 1210 may include one or more processing units. Optionally, an application processor and a modem processor may be integrated in the processor 1210. The application processor primarily processes operations involving an operating system, user interfaces, application programs, and the like. The modem processor primarily processes radio communication signals, for example, being a baseband processor. It can be understood that the modem processor may alternatively be not integrated in the processor 1210.

The processor 1210 is configured to receive configuration information, and receive an LP-WUS signal and/or a beacon signal according to the configuration information, where the configuration information includes information for indicating a time-frequency resource position at which a low-power wake-up LP-WUS signal is located and information for indicating a time-frequency resource position at which a beacon signal is located, where the LP-WUS signal and the beacon signal do not overlap in a time domain resource position and/or the LP-WUS signal and the beacon signal do not overlap in a frequency domain resource position.

It can be learned that in the embodiments of this application, when configuring the time-frequency resource of the LP-WUS signal and the time-frequency resource of the beacon signal, the network-side device can separate the two signals based on a time-domain resource and/or a frequency-domain resource, and the terminal chooses to receive which signal, so as to solve the conflict between the two signals, avoid the problems that a main communication module of the terminal fails to wake up and time synchronization with the network-side device fails, thereby implementing coexistence of the two signals and ensuring communication quality of the terminal.

Optionally, as an embodiment, the processor 1210 is further configured to receive the LP-WUS signal and the beacon signal in a case that it is determined, according to the configuration information, that a sending time of the LP-WUS signal is different from a sending time of the beacon signal; or receive one of the LP-WUS signal and the beacon signal in a case that it is determined, according to the configuration information, that the sending time of the LP-WUS signal is the same as the sending time of the beacon signal.

Optionally, as an embodiment, the processor 1210 is further configured to: monitor a signal at the time-frequency resource position at which the beacon signal is located or at the time-frequency resource position at which the LP-WUS signal is located; in a case that a beacon signal is monitored at the time-frequency resource position at which the beacon signal is located, if the beacon signal and the LP-WUS signal are detected, decode the beacon signal and skip decoding the LP-WUS signal; and in a case that an LP-WUS signal is monitored at the time-frequency resource position at which the LP-WUS signal is located, if the LP-WUS signal and the beacon signal are detected, decode the LP-WUS signal and skip decoding the beacon signal.

Optionally, as an embodiment, the processor 1210 is further configured to: based on pre-configured priority information, choose to receive one of the LP-WUS signal and the beacon signal.

Optionally, as an embodiment, the processor 1210 is further configured to: based on a beacon signal detected at the time-frequency resource position at which the beacon signal is located, determine whether quality of a communication link between the terminal and the network-side device meets a preset quality requirement; and perform one of the following operations in a case that the preset quality requirement is not met:

exiting an LP-WUS signal monitoring state and entering a radio resource control idle or inactive state;
performing measurement on a synchronization signal block SSB and monitoring a paging (paging) signal;
triggering a random access procedure; and
exiting a beacon signal monitoring state and entering an LP-WUS signal monitoring state.

Optionally, as an embodiment, the processor 1210 is further configured to: start a first timer when a beacon signal is detected, and if a next beacon signal is not detected when the first timer expires, determine that the quality of the communication link between the terminal and the network-side device does not meet the preset quality requirements; or

start a second timer when continuous N beacon signals are detected and quality of each of the N beacon signals is not higher than a preset first quality value, and if continuous M beacon signals are not detected when the second timer expires, determine that the quality of the communication link between the terminal and the network-side device does not meet the preset quality requirement; or
if continuous M beacon signals are detected when the second timer expires, and quality of a signal of the M beacon signals is not higher than a preset second quality value, determine that the quality of the communication link between the terminal and the network-side device does not meet the preset quality requirement; where N and M are integers greater than 1.

Optionally, as an embodiment, the LP-WUS signal is a periodic signal, and the processor 1210 is further configured to: monitor an LP-WUS signal at the time-frequency resource position at which the LP-WUS signal is located, and start a third timer; and if an LP-WUS signal is not detected when the third timer expires, exit an LP-WUS signal monitoring state and/or enter a beacon signal monitoring state.

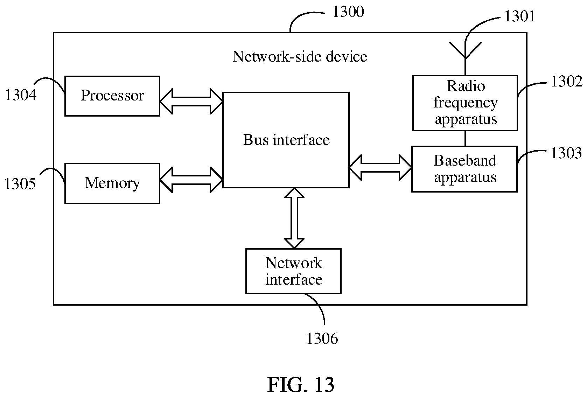

FIG. 13 is a schematic diagram of a hardware structure of a network-side device for implementing the embodiments of this application.

As shown in FIG. 13, the network-side device 1300 includes an antenna 1301, a radio frequency apparatus 1302, a baseband apparatus 1303, a processor 1304, and a memory 1305. The antenna 1301 is connected to the radio frequency apparatus 1302. In an uplink direction, the radio frequency apparatus 1302 receives information by using the antenna 1301, and sends the received information to the baseband apparatus 1303 for processing. In a downlink direction, the baseband apparatus 1303 processes to-be-sent information, and sends the information to the radio frequency apparatus 1302; and the radio frequency apparatus 1302 processes the received information and then sends the information out by using the antenna 1301.

The method executed by the network-side device in the foregoing embodiments can be implemented in the baseband apparatus 1303, and the baseband apparatus 1303 includes a baseband processor.

The baseband apparatus 1303 may include, for example, at least one baseband board, where a plurality of chips are disposed on the baseband board. As shown in FIG. 13, one of the chips is, for example, a baseband processor, and is connected to the memory 1305 through the bus interface, to invoke a program in the memory 1305 to perform the operations of the network-side device shown in the foregoing method embodiments.

The network-side device may further include a network interface 1306, where the interface is, for example, a common public radio interface (Common Public Radio Interface, CPRI).

Specifically, the network-side device 1300 in this embodiment of the present invention further includes: instructions or a program stored in the memory 1305 and capable of running on the processor 1304. The processor 1304 invokes the instructions or program in the memory 1305 to execute the method executed by the modules shown in FIG. 9, with the same technical effects achieved. To avoid repetition, details are not repeated herein.

An embodiment of this application further provides a readable storage medium, where a program or an instruction is stored in the readable storage medium. When the program or the instruction is executed by a processor, the processes of the foregoing embodiment of the signal processing method can be implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip, where the chip includes a processor and a communication interface. The communication interface is coupled to the processor, and the processor is configured to run a program or an instruction to implement the processes of the foregoing embodiment of the signal processing method, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and when being executed by at least one processor, the computer program/program product is configured to implement the processes of the foregoing signal processing method embodiments, with the same technical effects achieved. To avoid repetition, details are not repeated herein.

An embodiment of this application further provides a signal processing system, including a terminal and a network-side device, where the terminal can be configured to execute the steps of the signal processing method described above, and the network-side device can be configured to execute the steps of the signal processing method described above.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

**Claims**

1. A signal processing method, comprising:

   receiving, by a terminal, configuration information, wherein the configuration information comprises information for indicating a time-frequency resource position at which a low-power wake-up LP-WUS signal is located and information for indicating a time-frequency resource position at which a beacon signal is located, wherein the LP-WUS signal and the beacon signal do not overlap in a time domain resource position and/or the LP-WUS signal and the beacon signal do not overlap in a frequency domain resource position; and
   receiving, by the terminal, the LP-WUS signal and/or the beacon signal according to the configuration information.

2. The method according to claim 1, wherein the receiving, by the terminal, the LP-WUS signal and/or the beacon signal according to the configuration information comprises:

   receiving, by the terminal, the LP-WUS signal and the beacon signal in a case that it is determined, according to the configuration information, that a sending time of the LP-WUS signal is different from a sending time of the beacon signal; or

receiving, by the terminal, one of the LP-WUS signal and the beacon signal in a case that it is determined, according to the configuration information, that the sending time of the LP-WUS signal is the same as the sending time of the beacon signal.

3. The method according to claim 2, wherein the receiving, by the terminal, one of the LP-WUS signal and the beacon signal comprises:

monitoring, by the terminal, a signal at the time-frequency resource position at which the beacon signal is located or at the time-frequency resource position at which the LP-WUS signal is located;

in a case that a beacon signal is monitored at the time-frequency resource position at which the beacon signal is located, if the terminal detects the beacon signal and the LP-WUS signal, decoding the beacon signal and skipping decoding the LP-WUS signal; and

in a case that an LP-WUS signal is monitored at the time-frequency resource position at which the LP-WUS signal is located, if the terminal detects the beacon signal and the LP-WUS signal, decoding the LP-WUS signal and skipping decoding the beacon signal.

4. The method according to claim 2, wherein the receiving, by the terminal, one of the LP-WUS signal and the beacon signal comprises:
choosing, by the terminal based on pre-configured priority information, to receive one of the LP-WUS signal and the beacon signal.

5. The method according to claim 1, wherein the method further comprises:

determining, by the terminal based on a beacon signal detected at the time-frequency resource position at which the beacon signal is located, whether quality of a communication link between the terminal and the network-side device meets a preset quality requirement; and

in a case that the preset quality requirement is not met, performing, by the terminal, one of the following operations:

exiting an LP-WUS signal monitoring state and entering a radio resource control idle or inactive state;

performing measurement on a synchronization signal block SSB and monitoring a paging (paging) signal;

triggering a random access procedure; and exiting a beacon signal monitoring state and entering an LP-WUS signal monitoring state.

6. The method according to claim 5, wherein the determining, by the terminal based on a beacon signal detected at the time-frequency resource position at which the beacon signal is located, whether quality of a communication link between the terminal and the network-side device meets a preset quality requirement comprises:

starting, by the terminal, a first timer when a beacon signal is detected, and if a next beacon signal is not detected when the first timer expires, determining that the quality of the communication link between the terminal and the network-side device does not meet the preset quality requirements; or

starting, by the terminal, a second timer when continuous N beacon signals are detected and quality of each of the N beacon signals is not higher than a preset first quality value, and if continuous M beacon signals are not detected when the second timer expires, determining that the quality of the communication link between the terminal and the network-side device does not meet the preset quality requirement; or

if continuous M beacon signals are detected when the second timer expires, and quality of a signal of the M beacon signals is not higher than a preset second quality value, determining that the quality of the communication link between the terminal and the network-side device does not meet the preset quality requirement;

wherein N and M are integers greater than 1.

7. The method according to claim 1, wherein the LP-WUS signal is a periodic signal, and the method further comprises:
monitoring, by the terminal, an LP-WUS signal at the time-frequency resource position at which the LP-WUS signal is located, and starting a third timer; and
if an LP-WUS signal is not detected when the third timer expires, exiting, by the terminal, an LP-WUS signal monitoring state and/or entering a beacon signal monitoring state.

8. A signal processing apparatus, comprising:

a first receiving module, configured to receive configuration information, wherein the configuration information comprises information for indicating a time-frequency resource position at which a low-power wake-up LP- WUS signal is located and information for indicating a time-frequency resource position at which a beacon signal is located, wherein the LP-WUS signal and the beacon signal do not overlap in a time domain resource position and/or the LP-WUS signal and the beacon signal do not overlap in a frequency domain resource position; and

a second receiving module, configured to receive the LP-WUS signal and/or the beacon signal according to the configuration information.

9. The apparatus according to claim 8, wherein the second receiving module comprises:

a first receiving submodule, configured to receive the LP-WUS signal and the beacon signal in a case that it is determined, according to the configuration information, that a sending time of the LP-WUS signal is different from a sending time of the beacon signal; or

a second receiving submodule, configured to receive one of the LP- WUS signal and the beacon signal in a case that it is determined, according to the configuration information, that the sending time of the LP-WUS signal is the same as the sending time of the beacon signal.

10. The apparatus according to claim 9, wherein the second receiving submodule comprises:

a monitoring unit, configured to monitor a signal at the time-frequency resource position at which the beacon signal is located or at the time-frequency resource position at which the LP-WUS signal is located;

a first processing unit, configured to: in a case that a beacon signal is monitored at the time-frequency resource position at which the beacon signal is located, if the beacon signal and the LP-WUS signal are detected, decode the beacon signal and skip decoding the LP-WUS signal; and

a second processing unit, configured to: in a case that an LP-WUS signal is monitored at the time-frequency resource position at which the LP-WUS signal is located, if the beacon signal and the LP-WUS signal are detected, decode the LP-WUS signal and skip decoding the beacon signal.

11. The apparatus according to claim 9, wherein the second receiving submodule comprises:

a receiving unit, configured to: based on pre-configured priority information, choose to receive one of the LP-WUS signal and the beacon signal.

12. The apparatus according to claim 8, wherein the apparatus further comprises:

a determining module, configured to: based on a beacon signal detected at the time-frequency resource position at which the beacon signal is located, determine whether quality of a communication link between the terminal and the network-side device meets a preset quality requirement; and

a first processing module, configured to perform one of the following operations in a case that the preset quality requirement is not met:

exiting an LP-WUS signal monitoring state and entering a radio resource control idle or inactive state;

performing measurement on a synchronization signal block SSB and monitoring a paging (paging) signal;

triggering a random access procedure; and

exiting a beacon signal monitoring state and entering an LP-WUS signal monitoring state.

13. The apparatus according to claim 12, wherein the determining module comprises:

a first determining submodule, configured to start a first timer when a beacon signal is detected, and if a next beacon signal is not detected when the first timer expires, determine that the quality of the communication link between the terminal and the network-side device does not meet the preset quality requirements; or

a second determining submodule, configured to start a second timer when continuous N beacon signals are detected and quality of each of the N beacon signals is not higher than a preset first quality value, and if continuous M beacon signals are not detected when the second timer expires, determine that the quality of the communication link between the terminal and the network-side device does not meet the preset quality requirement; or

a third determining submodule, configured to: if continuous M beacon signals are detected when the second timer expires, and quality of a signal of the M beacon signals is not higher than a preset second quality value, determine that the quality of the communication link between the terminal and the network-side device does not meet the preset quality requirement; wherein N and M are integers greater than 1.

14. The apparatus according to claim 8, wherein the LP-WUS signal is a periodic signal, and the apparatus further comprises:

a second processing module, configured to monitor an LP-WUS signal at the time-frequency resource position at which the LP-WUS signal is located, and start a third timer; and if an LP-WUS signal is not detected when the third timer expires, exit an LP-WUS signal monitoring state and/or enter a beacon signal monitoring state.

15. A signal processing method, comprising:

sending, by a network-side device, configuration information to a terminal, wherein the configuration information comprises information for indicating a time-frequency resource position at which a low-power wake-up LP-WUS signal is located and information for indicating a time-frequency resource position at which a beacon signal is located, wherein the LP-WUS signal and the beacon signal do not overlap in a time domain resource position and/or the LP-WUS signal and the beacon signal do not overlap in a frequency domain resource position; and
sending, by the network-side device, the LP-WUS signal and/or the beacon signal to the terminal.

16. The method according to claim 15, wherein that the LP-WUS signal and the beacon signal do not overlap in the time domain resource position comprises:
a sending time of the LP-WUS signal is different from a sending time of the beacon signal.

17. The method according to claim 16, wherein that the sending time of the LP-WUS signal is different from the sending time of the beacon signal comprises:
a time interval between the sending time of the LP-WUS signal and the sending time of the beacon signal is greater than a radio frequency conversion time of the terminal.

18. The method according to claim 15, wherein that the LP-WUS signal and the beacon signal do not overlap in the frequency domain resource position comprises:
a frequency domain occupied by the LP-WUS signal does not overlap with a frequency domain occupied by the beacon signal.

19. The method according to claim 18, wherein that the frequency domain occupied by the LP-WUS signal does not overlap with the frequency domain occupied by the beacon signal comprises:
a frequency gap between the frequency domain occupied by the LP-WUS signal and the frequency domain occupied by the beacon signal is larger than a filter bandwidth of the terminal.

20. A signal processing apparatus, comprising:

a first sending module, configured to send configuration information to a terminal, wherein the configuration information comprises information for indicating a time-frequency resource position at which a low-power wake-up LP-WUS signal is located and information for indicating a time-frequency resource position at which a beacon signal is located, wherein the LP-WUS signal and the beacon signal do not overlap in a time domain resource position and/or the LP-WUS signal and the beacon signal do not overlap in a frequency domain resource position; and
a second sending module, configured to send the LP-WUS signal and/or the beacon signal to the terminal.

21. The apparatus according to claim 20, wherein that the LP-WUS signal and the beacon signal do not overlap in the time domain resource position comprises:
a sending time of the LP-WUS signal is different from a sending time of the beacon signal.

22. The apparatus according to claim 21, wherein that the sending time of the LP-WUS signal is different from the sending time of the beacon signal comprises:
a time interval between the sending time of the LP-WUS signal and the sending time of the beacon signal is greater than a radio frequency conversion time of the terminal.

23. The apparatus according to claim 20, wherein that the LP-WUS signal and the beacon signal do not overlap in the frequency domain resource position comprises:
a frequency domain occupied by the LP-WUS signal does not overlap with a frequency domain occupied by the beacon signal.

24. The apparatus according to claim 23, wherein that the frequency domain occupied by the LP-WUS signal does not overlap with the frequency domain occupied by the beacon signal comprises:
a frequency gap between the frequency domain occupied by the LP-WUS signal and the frequency domain occupied by the beacon signal is larger than a filter bandwidth of the terminal.

25. A terminal, comprising a processor and a memory, and a program or instructions capable of running on the processor are stored in the memory, wherein when the program or instructions are executed by the processor, the steps of the signal processing method according to any one of claims 1 to 7 are implemented.

26. A network-side device, comprising a processor and a memory, and a program or instructions capable of running on the processor are stored in the memory, wherein when the program or instructions are executed by the processor, the steps of the signal processing method according to any one of claims 15 to 19 are implemented.

27. A readable storage medium, wherein the readable storage medium stores a program or instructions, and when the program or instructions are executed by a processor, the signal processing method according to any one of claims 1 to 7 are implemented, or the steps of the signal processing method according to any one of claims 15 to 19 are implemented.

28. A chip, wherein the chip comprises a processor and a communication interface, the communication interface is coupled to the processor, and the processor is configured to execute a program or instructions to implement the signal processing method according to any one of claims 1 to 7 or the steps of the signal processing method according to any one of claims 15 to 19.

29. A computer program product, wherein the program product is stored in a non-volatile storage medium, and the program product is executed by at least one processor to implement the signal processing method according to any one of claims 1 to 7, or the steps of the signal processing method according to any one of claims 15 to 19.

30. An electronic device, wherein the electronic device is configured to implement the signal processing method according to any one of claims 1 to 7, or the steps of the signal processing method according to any one of claims 15 to 19.

FIG. 1

FIG. 2

Network-side
device

Low-power
wake-up signal

Beacon signal

Terminal

12

11

FIG. 3

Receive configuration information, where the configuration
information includes information for indicating a time-frequency
resource position at which a low-power wake-up signal is located and
information for indicating a time-frequency resource position at
which a beacon signal is located, where the low-power wake-up
signal and the beacon signal do not overlap in a time domain resource
position and/or the low-power wake-up signal and the beacon signal
do not overlap in a frequency domain resource position

401

Receive the low-power wake-up signal and/or the beacon signal
according to the configuration information

402

FIG. 4

FIG. 5

FIG. 6

Frequency

Beacon
signal

Low-power
wake-up
signal

Time

## FIG. 7

Send configuration information to a terminal, where the configuration
information includes information for indicating a time-frequency
resource position at which a low-power wake-up signal is located and
information for indicating a time-frequency resource position at which
a beacon signal is located, where the low-power wake-up signal and
the beacon signal do not overlap in a time domain resource position
and/or the low-power wake-up signal and the beacon signal do not
overlap in a frequency domain resource position

~ 801

Send the low-power wake-up signal and/or the beacon signal to the
terminal

~ 802

## FIG. 8

901

902

First receiving module

903

Second receiving module

FIG. 9

1000

1001

First sending module

1002

Second sending module

FIG. 10

1100

Communication device

1101

Processor

Memory

1102

FIG. 11

1200

1201 — Radio frequency unit

Network module — 1202

1210 —

1209 — Memory
Application program
Operating system

Audio output unit — 1203

1204

Input unit
Graphics processing unit — 12041
Microphone — 12042

1208 — Interface unit

Processor

1207 —

User input unit

12071 — Touch panel

12072 — Other input devices

1206

Display unit — 12061
Display panel

Sensor — 1205

FIG. 12

FIG. 13

## INTERNATIONAL SEARCH REPORT

| International application No. |
|---|
| **PCT/CN2023/094117** |

| A. | CLASSIFICATION OF SUBJECT MATTER |
|---|---|
| | H04W72/04(2023.01)i |

According to International Patent Classification (IPC) or to both national classification and IPC

| B. | FIELDS SEARCHED |
|---|---|

Minimum documentation searched (classification system followed by classification symbols)

IPC:H04W.H04L

Documentation searched other than minimum documentation to the extent that such documents are included in the fields searched

Electronic data base consulted during the international search (name of data base and, where practicable, search terms used)

CNTXT, ENTXT, IEEE, 3GPP: 低功耗, 低能量, 低功率, 唤醒信号, 信标, 周期, 扫描, 资源, 频域, 时域, 重叠, 冲突, 正交, 偏移, low+ power, LP, WUR, WUS, beacon, scan, resource, frequency, time, overlap, conflict, offset

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2020059861 A1 (INTEL IP CORPORATION) 20 February 2020 (2020-02-20) description, paragraphs 0012-0073, and figures 1-3 | 1, 2, 8, 9, 15-30 |
| A | US 2021306951 A1 (LG ELECTRONICS INC.) 30 September 2021 (2021-09-30) entire document | 1-30 |
| A | CN 111148191 A (SPREADTRUM COMMUNICATIONS (SHANGHAI) CO., LTD.) 12 May 2020 (2020-05-12) entire document | 1-30 |
| A | CN 112586041 A (LG ELECTRONICS INC.) 30 March 2021 (2021-03-30) entire document | 1-30 |
| A | SAMSUNG. "Considerations on XR-specific Power Savings" *3GPP TSG RAN WG1 #109-e R1-2203927*, 29 April 2022 (2022-04-29), entire document | 1-30 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 July 2023** | **21 July 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/094117**

| Patent document cited in search report | | | Publication date (day/month/year) | Patent family member(s) | | | Publication date (day/month/year) |
|---|---|---|---|---|---|---|---|
| US | 2020059861 | A1 | 20 February 2020 | WO | 2018156199 | A1 | 30 August 2018 |
| US | 2021306951 | A1 | 30 September 2021 | WO | 2020032726 | A1 | 13 February 2020 |
| | | | | CN | 112586041 | A | 30 March 2021 |
| | | | | DE | 112019003998 | T5 | 22 April 2021 |
| CN | 111148191 | A | 12 May 2020 | US | 2021400585 | A1 | 23 December 2021 |
| | | | | WO | 2020088257 | A1 | 07 May 2020 |
| | | | | EP | 3876609 | A1 | 08 September 2021 |
| | | | | IN | 202117023204 | A | 05 November 2021 |
| CN | 112586041 | A | 30 March 2021 | DE | 112019003998 | T5 | 22 April 2021 |
| | | | | US | 2021306951 | A1 | 30 September 2021 |
| | | | | WO | 2020032726 | A1 | 13 February 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210567109